(19) Europäisches Patentamt
European Patent Office
Office européen des brevets

(11) **EP 4 691 667 A1**

(12) **EUROPEAN PATENT APPLICATION**
published in accordance with Art. 153(4) EPC

(43) Date of publication:
**11.02.2026 Bulletin 2026/07**

(21) Application number: 24780048.5

(22) Date of filing: **22.03.2024**

(51) International Patent Classification (IPC):
**B22F 1/00** (2022.01)  **B22F 1/05** (2022.01)
**B22F 1/16** (2022.01)  **B22F 1/065** (2022.01)
**B22F 10/14** (2021.01)  **B22F 10/34** (2021.01)
**B33Y 70/00** (2020.01)  **C22C 21/00** (2006.01)

(52) Cooperative Patent Classification (CPC):
**B22F 1/00; B22F 1/05; B22F 1/065; B22F 1/16;
B22F 10/14; B22F 10/34; B33Y 70/00; C22C 21/00;
Y02P 10/25**

(86) International application number:
**PCT/JP2024/011444**

(87) International publication number:
**WO 2024/203930 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.03.2023 JP 2023055049**

(71) Applicant: **Mitsubishi Materials Corporation
Tokyo 100-8117 (JP)**

(72) Inventors:
• **KOBAYASHI, Keigo**
  **Saitama-shi, Saitama 330-8508 (JP)**
• **OHMORI, Shinichi**
  **Saitama-shi, Saitama 330-8508 (JP)**
• **KATO, Jun**
  **Saitama-shi, Saitama 330-8508 (JP)**
• **ORITO, Kenji**
  **Saitama-shi, Saitama 330-8508 (JP)**

(74) Representative: **Hoffmann Eitle
Patent- und Rechtsanwälte PartmbB
Arabellastraße 30
81925 München (DE)**

(54) **ALUMINUM POWDER PRODUCT**

(57)    In this aluminum powder product (1), a BET specific surface area of the aluminum powder product (1) is 0.16 $m^2$/g or more, a phosphorus concentration of an entire of the aluminum powder product (1) measured by a molybdenum blue method is $1 \times 10^{-3}$% by mass or more, and in a photoelectron spectrum of the aluminum powder product (1) measured by X-ray photoelectron spectroscopy (XPS method), a ratio $I_{P2s}/I_{Cl2p}$ of a P2s peak intensity $I_{P2s}$ at 191.5 eV to a Cl2p peak intensity $I_{Cl2p}$ at 199.0 eV is 1.00 or more.

FIG. 1

EP 4 691 667 A1

**Description**

TECHNICAL FIELD

The present invention relates to an aluminum powder product.

The present application claims priority on Japanese Patent Application No. 2023-055049 filed on March 30, 2023, the content of which is incorporated herein by reference.

BACKGROUND ART

Aluminum is used in heatsinks and so on for equipments due to its light weight and good electrical and thermal conductivity but is a typical metal with poor sinterability, and densification of the tissue has been considered as a challenge in powder metallurgy. Particularly, in a case where a complex and precise shape control is required for a fin material and so on as a heat exchange material, it is general to make an approach by powder sintering methods, such as metal injection molding and additive manufacturing, due to their characteristics.

In the powder sintering methods, a silo or a hopper is commonly used as a powder feeder, but powder with low flowability forms a bridge or a rathole in the feeder, which makes a channel occluded. As a result, the flow of the powder stagnates, and some of the powder becomes caked or undergoes a composition change due to the pressure of the other powder, which often causes a sintering defect. It is commonly considered that the flowability of powder increases if the shape of the particle is closer to a sphere, but the control of the particle shape in a production step is generally difficult.

In the related art, in a case where desired physical properties cannot be obtained in a production stage, a surface treatment has been performed on the powder. For example, a technology is known in which nanoparticles of silica, alumina, and so on having a surface modified with an organic substance are added to the surfaces of the particles of a titanium alloy or a nickel alloy; and thereby, the surfaces of these particles are coated with the nanoparticles of silica, alumina, and so on. In addition, a technology is known in which thermal plasma treatment is conducted to afford a nanostructure on the surfaces of particles, and the contact area between the particles decreases; and thereby, flowability is improved (refer to Patent Document 1).

In addition, a technology is known in which powder having shear adhesion increased and flowability degraded by a pulverization treatment is subjected to a heat treatment to form an oxide film on the surfaces of the particles; and thereby, the shear adhesion is decreased and the flowability is restored (refer to Patent Document 2).

Citation List

Patent Documents

Patent Document 1: Japanese Unexamined Patent Application, First Publication No. 2019-112699
Patent Document 2: Japanese Unexamined Patent Application, First Publication No. 2019-183199

SUMMARY OF INVENTION

Technical Problem

However, the heat treatment or thermal plasma treatment of the powder requires a dedicated facility and therefore cannot be easily performed. In addition, since aluminum has a low melting point, it is difficult to treat only the particle surfaces by the thermal plasma treatment. And the particle shape changes, and powder characteristics such as the packing density are significantly affected. Therefore, the thermal plasma treatment is considered to be difficult to be applied.

Therefore, a surface treatment technology that affords high flowability to aluminum powder particles while the outer diameters and shapes of the powder particles are maintained is desired.

The present invention has been come up with in view of the above-described problems, and a purpose of the present invention is to provide an aluminum powder product with high flowability while maintaining the outer diameters and morphology. Solution to Problem

As a result of various studies, the present invention provides the following aluminum powder products.

(1) An aluminum powder product according to an aspect (1) of the present invention, in which a BET specific surface area of the aluminum powder product is 0.16 $m^2$/g or more, a phosphorus concentration of an entire of the aluminum powder product measured by a molybdenum blue method is $1\times10^{-3}$% by mass or more, and in a photoelectron spectrum of the aluminum powder product measured by X-ray photoelectron spectroscopy (XPS method), a ratio $I_{P2s}/I_{Cl2p}$ of a P2s peak intensity $I_{P2s}$ at 191.5 eV to a Cl2p peak intensity $I_{Cl2p}$ at 199.0 eV is 1.00 or more.

The aluminum powder product has a predetermined BET specific surface area, has a predetermined total phosphorus concentration, and has a P2s peak intensity at 191.5 eV that is equal to or greater than the Cl2p peak intensity at 199.0 eV in the photoelectron spectrum of particles of the aluminum powder product. That is, phosphoric acid-based compounds are present in an amount equal to or greater than that of inevitable impurities of chlorine-containing compounds. Thereby, the flowability of the aluminum powder product is improved. Therefore, it is possible to prevent clogging of the aluminum powder product in a channel of a silo or a hopper that accommodates the aluminum powder product.

Since the particle structure of the aluminum powder product can be easily realized without affecting the particle size, it becomes easy to obtain an aluminum powder product having the aimed particle size and having a packing density and so on controlled to the aimed values.

In addition, since it is possible to suppress the generation of hydrogen in hot water, the aluminum powder product has superior corrosion resistance.

(2) An aspect (2) of the present invention is the aluminum powder product of the aspect (1), in which it is preferable that a high concentration region of phosphorus is provided in a region at a depth of 30 nm or less from an outermost surface of a particle that constitutes the aluminum powder product, a phosphorus concentration in the high concentration region of phosphorus is higher than a phosphorus concentration in a region at a depth of more than 30 nm from the outermost surface of the particle by 3.5 times or more, and phosphoric acid-based compounds are intensively distributed in the high concentration region of phosphorus.

In detail, the region at a depth of more than 30 nm from the outermost surface of the particle is a region at a depth of more than 30 nm and 60 nm or less from the outermost surface.

From an analysis by the XPS method, the phosphoric acid-based compounds are presumed to be oxoacids of phosphorus.

In a case where the high concentration region of phosphorus is present in a region from the outermost surface to a depth of 30 nm, and the phosphoric acid-based compounds are intensively distributed in the region, an aluminum powder product exhibiting the above-described superior action and effect is obtained.

(3) An aspect (3) of the present invention is the aluminum powder product of the aspect (1) or (2), in which it is preferable that a volume-based 50% cumulative particle size (median diameter $D_{50}$) measured by a laser diffraction scattering method is 15 $\mu$m or more and 45 $\mu$m or less, and a Hausner ratio of the aluminum powder product is 1.14 or less.

When the median diameter $D_{50}$ is 15 $\mu$m or more of the aluminum powder product, it is safer from a viewpoint of handling of the aluminum powder product. When the median diameter $D_{50}$ is 15 $\mu$m or more and 45 $\mu$m or less, the handleability is superior when used in additive manufacturing, and it is thus possible to provide an aluminum powder product suitable for additive manufacturing.

When the Hausner ratio of the aluminum powder product is 1.14 or less, the aluminum powder product has superior flowability. In addition, the superior flowability contributes to retaining flowability required for powder sintering, and it is thus possible to provide an aluminum powder product suitable for powder sintering.

(4) An aspect (4) of the present invention is the aluminum powder product according to any one of the aspects (1) to (3), in which a sphericity measured by an image analysis method is preferably 0.93 or more.

When the sphericity of the particle is 0.93 or more, the particle has a shape close to a sphere, which is preferable from a viewpoint of affording good flowability.

(5) An aspect (5) of the present invention is the aluminum powder product according to any one of the aspects (1) to (4), in which the aluminum powder product is preferably used in additive manufacturing.

Advantageous Effects of Invention

According to the aspects of the present invention, the aluminum powder product has a predetermined BET specific surface area, has a predetermined total phosphorus concentration, and has a P2s peak intensity at 191.5 eV that is equal to or greater than the Cl2p peak intensity at 199.0 eV in the photoelectron spectrum of the aluminum powder product. Thereby, the flowability of the aluminum powder product is improved.

Therefore, it is possible to prevent clogging of the aluminum powder product in a channel of a silo or a hopper that accommodates the aluminum powder product.

Since the particle structure of the aluminum powder product can be realized without affecting the particle size, it becomes easy to obtain an aluminum powder product having the aimed particle size and having a packing density and so on controlled to the aimed value.

In addition, since it is possible to suppress the generation of hydrogen in hot water, the aluminum powder product has superior corrosion resistance.

BRIEF DESCRIPTION OF DRAWINGS

[FIG. 1] A partial cross-sectional view of a particle itself of an aluminum powder product according to a first embodiment.
[FIG. 2A] A concentration profile of each element of an aluminum powder product of Example 1 in a depth direction.
[FIG. 2B] A concentration profile of each element of an aluminum powder product of Example 2 in a depth direction.
[FIG. 2C] A concentration profile of each element of an aluminum powder product of Example 3 in a depth direction.
[FIG. 2D] A concentration profile of each element of an aluminum powder product of Example 4 in a depth direction.
[FIG. 2E] A concentration profile of each element of an aluminum powder product of Comparative Example 1 in a depth direction.
[FIG. 2F] A concentration profile of each element of an aluminum powder product of Comparative Example 2 in a depth direction.
[FIG. 2G] A concentration profile of each element of an aluminum powder product of Comparative Example 3 in a depth direction.
[FIG. 2H] A concentration profile of each element of an aluminum powder product of Comparative Example 4 in a depth direction.
[FIG. 3] A secondary electron micrograph of the surface of the aluminum powder product of Comparative Example 1 captured by SEM.
[FIG. 4] A secondary electron micrograph of the surface of the aluminum powder product of Example 1 captured by SEM.
[FIG. 5A] Photoelectron spectra of the aluminum powder products of Example 1 and Comparative Example 1 ranging from 190 to 210 eV of the binding energy.
[FIG. 5B] Photoelectron spectra of the aluminum powder products of Example 1 and Comparative Example 1 ranging from 123 to 143 eV of the binding energy.
[FIG. 6A] Photoelectron spectra of the aluminum powder products of Example 2 and Comparative Example 2 ranging from 190 to 210 eV of the binding energy.
[FIG. 6B] Photoelectron spectra of the aluminum powder products of Example 2 and Comparative Example 2 ranging from 123 to 143 eV of the binding energy.
[FIG. 7A] Photoelectron spectra of the aluminum powder products of Example 3 and Comparative Example 3 ranging from 190 to 210 eV of the binding energy.
[FIG. 7B] Photoelectron spectra of the aluminum powder products of Example 3 and Comparative Example 3 ranging from 123 to 143 eV of the binding energy.
[FIG. 8A] Photoelectron spectra of the aluminum powder products of Example 4 and Comparative Example 4 ranging from 190 to 210 eV of the binding energy.
[FIG. 8B] Photoelectron spectra of the aluminum powder products of Example 4 and Comparative Example 4 ranging from 123 to 143 eV of the binding energy.

DESCRIPTION OF EMBODIMENTS

Hereinafter, the present invention will be described in detail, but the present invention is not limited to the embodiment described below.

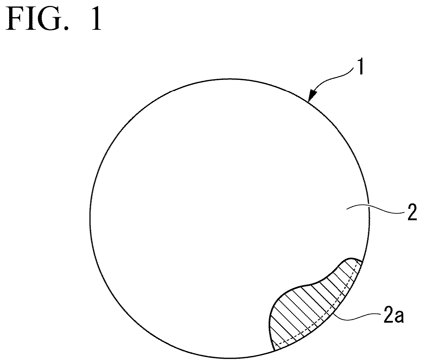

An aluminum powder product 1 of the present embodiment includes a plurality of spherical particles themselves (particles constituting the powder product) 2. FIG. 1 shows a partial cross-sectional view of the particle itself 2. A high concentration region 2a of phosphorus (P) is provided in a region of the outermost surface of the particle itself 2. It is more desirable that the high concentration region 2a of phosphorus is formed on the entire surface (100% by area) of the surface of the particle itself 2, but the high concentration region 2a of phosphorus may be formed on almost the entire surface (90% by area or more) of the surface of the particle itself 2 or a majority (60% by area or more) of the surface of the particle itself 2. It is difficult to accurately measure the area rate of the high concentration region 2a of phosphorus relative to the surface area of the particle itself 2. Although approximate area rates have been exemplified as described above, the present invention is not limited to the above-described area rate.

Since the high concentration region 2a of phosphorus is formed by immersion of raw material powder in a chemical solution as described below, there may be a region in which the high concentration region 2a of phosphorus is not formed due to insufficient reaction in a part of the surface of the particle itself 2.

The aluminum powder product 1 contains aluminum or an aluminum alloy and $1 \times 10^{-3}$% by mass or more of phosphorus. The aluminum has a purity of 99% or higher and consists of Al and inevitable impurities. In the present embodiment, aluminum is also referred to as pure aluminum.

Hereinafter, the composition of aluminum or an aluminum alloy, which is a component other than phosphorus, in the aluminum powder product 1 will be described, and the amount of each element will be described with a precondition of the total of the composition of aluminum or the aluminum alloy being 100% by mass. In the aluminum powder product 1, the amount of phosphorus is extremely small compared to the amounts of other elements for which the amounts are specified. Therefore, the amount of each element that is calculated with a precondition of the total of the composition of the aluminum powder product 1 being 100% by mass is almost the same as the amount of each element that is calculated with the precondition of the total of the composition of aluminum or the aluminum alloy being 100% by mass.

Elements that are contained in the aluminum alloy are not particularly limited, and any element that is commonly known to be contained in aluminum alloys may be contained. For example, the aluminum alloy contains Si: 13.5% or less, Mg: 5.6% or less, Ti: 0.2% or less, Cr: 0.35% or less, Mn: 1.5% or less, Fe: 0.7% or less, Cu: 6.0% or less, and Zn: 6.1% or less with a balance being Al and inevitable impurities. In this composition, since the range of the amount of each element includes 0%, the composition of aluminum is also included. Therefore, it can be also said that the aluminum powder product 1 contains Si: 13.5% or less, Mg: 5.6% or less, Ti: 0.2% or less, Cr: 0.35% or less, Mn: 1.5% or less, Fe: 0.7% or less, Cu: 6.0% or less, Zn: 6.1% or less, and P: $1 \times 10^{-3}$% or more with a balance being Al and inevitable impurities.

As an example, common aluminum or aluminum alloys represented by A1000 series, A2000 series, A3000 series, A4000 series, A5000 series, A6000 series, A7000 series, and so on specified in JIS standards may be used. Alternatively, other common aluminum alloys to which elements that are not contained in the aluminum alloys of these series are added may also be used.

A1050, which is an example of the A1000 series, indicates aluminum having a purity of 99.5% or higher and may contain Fe, Si, and the like as inevitable impurities.

The Al 100 series indicates aluminum having a purity of 99% or higher, and A1100 aluminum as an example contains Fe and Si in a total amount of 1.0% or less, Cu: about 0.05% to 0.20%, Mn: 0.05% or less, and Zn: 0.1% or less with a balance being Al and inevitable impurities. It can be also said that elements other than Al are inevitable impurities. Unless particularly otherwise specified, % that indicates the amount of an element is % by mass.

The A2000 series indicates aluminum alloys to which a large amount of Cu is added, and an A2024 aluminum alloy as an example contains Si: 0.5% or less, Fe: 0.5% or less, Cu: 3.8% to 4.9%, Mn: 0.3% to 0.9%, Mg: 1.2% to 1.8%, Cr: 0.1% or less, and Zn: 0.25% or less with a balance being Al and inevitable impurities.

The A3000 series indicates Al-Mn-based aluminum alloys, and an A3003 aluminum alloy as an example contains Si: 0.6% or less, Fe: 0.7% or less, Cu: 0.05% or less, Mn: 1.0% to 1.5%, and Zn: 0.1% or less with a balance being Al and inevitable impurities.

The A4000 series indicates aluminum alloys to which Si is added, and an A4032 aluminum alloy as an example contains Si: 11.0% to 13.5%, Fe: 1.0% or less, Cu: 0.5% to 1.3%, Mg: 0.8% to 1.3%, Cr: 0.10% or less, and Zn: 0.25% or less with a balance being Al and inevitable impurities.

The A5000 series indicates aluminum alloys to which Mg is added, and an A5052 aluminum alloy as an example contains Si: 0.25% or less, Fe: 0.4% or less, Cu: 0.10% or less, Mn: 0.1% or less, Mg: 2.2% to 2.8%, Cr: 0.15% to 0.35%, and Zn: 0.1% or less with a balance being Al and inevitable impurities.

The A6000 series indicates aluminum alloys to which Mg and Si are added, and an A6061 aluminum alloy as an example contains Si: 0.4% to 0.8%, Fe: 0.7% or less, Cu: 0.15% to 0.4%, Mn: 0.15% or less, Mg: 0.8% to 1.2%, Cr: 0.15% to 0.35%, Zn: 0.25% or less, and Ti: 0.15% or less with a balance being Al and inevitable impurities.

The A7000 series indicates aluminum alloys to which Zn and Mg are mainly added, and an A7075 aluminum alloy as an example contains Si: 0.4% or less, Fe: 0.5% or less, Cu: 1.2% to 2.0%, Mn: 0.3% or less, Mg: 2.1% to 2.9%, Cr: 0.18% to 0.35%, Zn: 5.1% to 6.1%, and Ti: 0.2% or less with a balance being Al and inevitable impurities.

"Concentration of phosphorus (P) contained in entire aluminum powder product: $1 \times 10^{-3}$% by mass or more (10 mass ppm or more)"

When the concentration of phosphorus that is contained in the entire aluminum powder product 1 is less than 10 ppm by mass (less than $1 \times 10^{-3}$% by mass), the effective high concentration region 2a tends to be inadequately formed. Since the concentration of phosphorus in the entire aluminum powder product 1 according to the present embodiment is 10 ppm by mass or more, the high concentration region 2a of phosphorus, which can afford good corrosion resistance and flowability to the aluminum powder product 1, is formed on the outermost surface of the particle itself 2. The concentration of phosphorus in the entire aluminum powder product 1 is preferably 10 ppm by mass or more and 100 ppm by mass or less, and more preferably 20 ppm by mass or more and 80 ppm by mass or less.

"$I_{P2s}/I_{Cl2p}$: 1.00 or more"

In the photoelectron spectrum of the aluminum powder product 1 measured by X-ray photoelectron spectroscopy (XPS method), in a case where the P2s peak intensity $I_{P2s}$ is smaller than the Cl2p peak intensity $I_{Cl2p}$, the abundance of the phosphoric acid-based compounds is smaller than the abundance of the chlorine-containing compounds, which are inevitable impurities, and the effective high concentration region 2a of phosphorus tends to be inadequately formed.

In the aluminum powder product 1 of the present embodiment, the P2s peak intensity $I_{P2s}$ is equal to or larger than the Cl2p peak intensity $I_{Cl2p}$. Therefore, the high concentration region 2a of phosphorus is formed on the outermost surface of the particle itself 2. The conductive properties are degraded by this high concentration region 2a of phosphorus, whereby the particles themselves 2 are charged (electrified), friction between the particles themselves 2 is decreased by electrostatic repulsion, and thus the flowability improves. In order to obtain such an action and effect, the ratio $I_{P2s}/I_{Cl2p}$ of the P2s peak intensity $I_{P2s}$ to the Cl2p peak intensity $I_{Cl2p}$ is preferably 1.00 or more and 100 or less, and more preferably 1.00 or more and 10.0 or less.

"BET specific surface area: 0.16 m$^2$/g or more"

When the BET specific surface area is made to be 0.16 m$^2$/g or more, it is possible to improve the Hausner ratio, which is an index of flowability. The BET specific surface area is preferably 0.16 m$^2$/g or more and 0.9 m$^2$/g or less, and more preferably 0.16 m$^2$/g or more and 0.4 m$^2$/g or less.

"High concentration region of phosphorus in which phosphoric acid-based compounds are present"

From an analysis result (the concentration profile of each element in the depth direction) by the EDS method (energy dispersive spectroscopy) of a specimen in Examples to be described below, it is presumed that the high concentration region 2a of phosphorus is present in a region at a depth of 30 nm or less from the outermost surface of the particle itself 2. The phosphorus concentration in the high concentration region 2a of phosphorus is higher than the phosphorus concentration in a region at a depth of more than 30 nm from the outermost surface of the particle itself 2 by 3.5 times or more. In addition, according to a P2p spectrum (P2p peak) and a P2s spectrum (P2s peak) obtained from the analysis result (photoelectron spectrum) of this specimen by the XPS method (X-ray photoelectron spectroscopy) to be described below, it is possible to presume that phosphorus is present in a state of phosphoric acid-based compounds in the high concentration region 2a of phosphorus. From an analysis by the XPS method, the phosphoric acid-based compounds are presumed to be oxoacids of phosphorus. Examples of the phosphoric acid-based compound include phosphinic acid, phosphonic acid, phosphorous acid, phosphoric acid, diphosphoric acid, triphosphoric acid, metatriphosphoric acid, and phosphoric acid derivatives such as etidronic acid, but it is difficult to determine the species of compounds by the XPS analysis.

In addition, in the element distribution of Al in the concentration profile of each element in the depth direction, the EDS spectrum intensity (detected signal intensity) of Al gradually increased in the depth direction from the outermost surface, and the EDS spectrum intensity of Al became stable in a depth region at a depth of more than 30 nm from the outermost surface. From this fact, it is possible to presume that some kinds of films have been generated in the particle itself 2 in a region at a depth of about 30 nm or less from the outermost surface, and it is possible to presume that the high concentration region 2a of phosphorus has been generated in the film.

"Volume-based 50% cumulative particle size (median diameter $D_{50}$): 15 $\mu$m or more and 45 $\mu$m or less"

In the aluminum powder product 1, the volume-based 50% cumulative particle size is preferably 15 $\mu$m or more and 45 $\mu$m or less. The volume-based 50% cumulative particle size is more preferably 20 $\mu$m or more and 35 $\mu$m or less.

When the median diameter $D_{50}$ of the aluminum powder product 1 is 15 $\mu$m or more and 45 $\mu$m or less, it is possible to obtain good manufacturing accuracy while retaining suitable flowability when using the aluminum powder product 1 in powder metallurgy. Therefore, it is possible to obtain the aluminum powder product 1 with good flowability and superior sinterability.

In a case where the median diameter ($D_{50}$) is less than 15 $\mu$m, the flowability deteriorates, and a concern of ignition or a risk of scattering becomes unignorable. In a case where the median diameter ($D_{50}$) exceeds 45 $\mu$m, the flowability improves, but it becomes difficult to obtain a high-density sintered body when using the aluminum powder product 1 in a manufacturing equipment used in powder metallurgic industry.

"Sphericity: 0.93 or more"

The sphericity of the particle itself 2 of the aluminum powder product 1 is measured by an image analysis method using an image analysis apparatus such as an automated image analyzer of dry powder, Morphologi 4 manufactured by Malvern Panalytical Ltd. When the sphericity is less than 0.93, the particle shape deviates from a spherical shape, and a decrease in packing density or degradation of flowability is likely to occur in the case of additive manufacturing. Therefore, the sphericity is preferably 0.93 or more. The sphericity is more preferably 0.93 or more and 1.00 or less and still more preferably 0.97 or more and 1.00 or less.

"Hausner ratio: 1.14 or less"

When the Hausner ratio is more than 1.14, the flowability deteriorates, and occlusion is likely to be caused in a channel in a hopper and so on. The Hausner ratio is preferably 1.14 or less, and in this case, flowability required for powder sintering can be insured. The Hausner ratio is more preferably 1.00 or more and 1.14 or less, and still more preferably 1.00 or more and 1.10 or less.

"Method for producing aluminum powder product"

A method for producing the aluminum powder product 1 includes a step of producing a raw material powder, a step of removing an oxide film using a rust remover, and a step of forming a film using a rust inhibitor. A rust remover containing phosphoric acid-based inorganic or organic molecules and a rust inhibitor containing phosphoric acid-based inorganic or organic molecules are used. Thereby, the phosphorus concentration of the entire aluminum powder product 1 becomes $1\times10^{-3}$% by mass or more. In addition, the high concentration region 2a of phosphorus is formed. The phosphoric acid-based inorganic or organic molecule is one or more selected from an oxoacid of phosphorus, a derivative of an oxoacid of phosphorus, a salt of an oxoacid of phosphorus, and a salt of a derivative of an oxoacid of phosphorus. Specifically, phosphoric acid, etidronic acid, and sodium phosphate are exemplified.

In order to produce the aluminum powder product 1, first, raw material powder is produced.

In order to produce the raw material powder, as an example, a powder production method, such as an atomization method, can be applied. In the atomization method, a molten metal having the aimed composition is prepared, the molten metal is sprayed at a high speed through a nozzle in an atmosphere such as the air, a nitrogen gas, or a vacuum atmosphere, and the liquid droplets of the molten metal are rapidly quenched; and thereby, the raw material powder is produced.

In the case of producing the aluminum powder product 1 containing pure aluminum, molten pure aluminum is used. In the case of producing the aluminum powder product 1 containing an aluminum alloy, a molten aluminum alloy having the aimed composition is used.

As a method for producing the molten aluminum alloy having the aimed composition, as an example, a method in which an aluminum alloy having the aimed compositional ratio is used as a mother material or a method in which high-purity aluminum having a purity of 99.5% or higher and a plurality of mother materials of additive elements are mixed together so that the mixed molten metals have the aimed compositional ratio is exemplified.

In the case of producing the raw material powder by spraying the molten metal in the atmosphere, particles of the raw material powder are usually formed in spherical or nearly spherical shapes.

The volume-based 50% cumulative average particle size ($D_{50}$: $\mu$m) of the raw material powder that is produced herein is, for example, 15 $\mu$m or more and 45 $\mu$m or less.

In the case of producing the raw material powder, an aluminum oxide film is generated on the outer peripheral surface of the particle of the raw material powder. In the case of performing the atomization method in a nitrogen gas atmosphere or a vacuum atmosphere to produce the raw material powder, even when the surface of the particle is not oxidized immediately after the production, in a case where the raw material powder is taken out from an atomization equipment or the production atmosphere and is subjected to the next step in the air, an oxide film is inevitably generated on the surface of the particle of the raw material powder as time goes by.

The aluminum oxide film acts as a sintering inhibition factor during sintering, which will be described below, and is thus desirably removed as much as possible. Therefore, in the present embodiment, a step of immersing the produced raw material powder in a solution of a rust remover to remove the oxide film is performed.

In the case of immersing the raw material powder in the solution of the rust remover, the solution of the rust remover can be used after being appropriately diluted by adding a solvent, such as water, thereto. In addition, in the case of immersing the raw material powder in the solution of the rust remover, the rust removal effect may be promoted by stirring and so on. In the case of stirring, an ultrasonic washer or a rotary blade stirrer can be used.

After the raw material powder is immersed in the solution of the rust remover, the surface of the raw material powder may be washed using a washing solution, such as pure water or tap water. In a case where there is a low possibility of re-oxidation due to the washing with pure water, tap water and so on after rust on the surface of the particle of the raw material powder is removed with the rust remover, it is preferable to remove the rust remover by the washing with pure water or tap water. When the effect of removing the oxide film with the rust remover is sufficient, it is considered that the surface of the particle is not easily re-oxidized even when washed after the rust removal.

In the case of removing the oxide film, it is desirable to remove the oxide film from the entire surface of the particle of the raw material powder; however, in a case where the oxide film is sufficiently thin or in a case where the residual area of the oxide film is small, the oxide film may remain on a part of the surface.

As the rust remover containing phosphoric acid-based inorganic or organic molecules, a solution containing an acidic solvent such as phosphoric acid and an organic acid such as citric acid, a basic solvent such as sodium hydroxide, and so on can be used. For example, it is possible to use a rust remover containing phosphoric acid-based inorganic or organic molecules and amine-based carboxylates.

Alternatively, as an example, it is possible to adopt a composition containing 2.5% to 10% by mass of citric acid, 2.5% to 10% by mass of propylene glycol monobutyl ether, and 2.5% to 10% by mass of phosphoric acid as main components and further containing 2.5% by mass or less of phosphonic acid and 2.5% by mass or less of a mineral spirit (aliphatic hydrocarbon).

As an example of the rust remover containing phosphoric acid-based inorganic or organic molecules and amine-based carboxylates, specifically, it is possible to use a rust remover BF4-26 manufactured by Tanimura Corporation and the like.

For example, 100 to 500 ml of a rust remover aqueous solution containing the above-described phosphoric acid-based inorganic or organic molecules and amine-based carboxylates and about 150 to 700 g of the raw material powder is charged into a container, the solution is stirred and mixed for 1 to 60 minutes, and the supernatant liquid is removed in a state where the raw material powder has been precipitated. The raw material powder precipitated in the rust remover aqueous solution can be rinse-washed with a necessary and sufficient amount of pure water and so on and is subjected to the next step. In the rinse washing, pure water is charged into the container, the solution is stirred, the solution is then left to stand, and the supernatant liquid is removed. By the way, as a step replacing the rinse washing, the residual rust remover can be neutralized by using a weakly basic and water-soluble chemical.

Once the oxide film of the raw material powder has been removed, the raw material powder is then immersed in a solution of a rust inhibitor to form a film of the rust inhibitor on the surface of the raw material powder.

In this case, it is possible to repeatedly rinse-wash the raw material powder while being accommodated in the container by adding pure water thereto a necessary number of times, then, to charge the following rust inhibitor to the container, and to perform an immersion treatment with the rust inhibitor.

In the case of immersing the raw material powder in the solution of the rust inhibitor, the solution of the rust inhibitor can be used as a diluted solution by a solvent such as water, if necessary. In addition, in the case of immersing the raw material powder in the aqueous solution of the rust inhibitor, the generation of the film may be promoted by stirring and so on. After the raw material powder is immersed in the solution of the rust inhibitor, the surface of the raw material powder may be washed using a washing solution, such as tap water.

In a case where rust is removed and the raw material powder is then immersed in the solution of the rust inhibitor, the following steps may be performed in the same container, but rust removal and rust inhibition may be each performed in a separate container.

(1) Aluminum powder is immersed in the solution containing the rust remover, and the solution is stirred.
(2) Next, the supernatant liquid is removed, and the raw material powder is rinse-washed by adding pure water to the container.
(3) Next, the supernatant liquid is removed, a rust inhibitor is further added to the same container, and the solution is stirred.

As the rust inhibitor containing the phosphoric acid-based inorganic or organic molecule, an aqueous solution of a volatile rust inhibitor containing one or a mixture of amine-based nitrites, amine-based carboxylates, amine-based chromates, carboxylic acid esters, and heterocyclic compounds and the phosphoric acid-based inorganic or organic molecules can be used. In addition, an organic solvent containing these salts, esters, and compounds may be used.

As an example of the rust inhibitor containing the phosphoric acid-based inorganic or organic molecules and amine-based carboxylates, it is possible to adopt an aqueous solution containing 2.5% to 10% by mass of potassium hydrogen phthalate as a main component and further containing 2.5% by mass or less of cyclocarbonic acid, 2.5% by mass or less of disodium metasilicate, and 2.5% by mass or less of trisodium phosphate.

In addition, a solution of a surfactant including the phosphoric acid-based inorganic or organic molecules and carboxylates and so on can be applied.

As an example of the rust inhibitor containing the phosphoric acid-based inorganic or organic molecules and amine-based carboxylates, specifically, it is possible to use a rust inhibitor BF4-16 manufactured by Tanimura Corporation.

As the rust inhibitor, additionally, MECHA HIBITOR #325 manufactured by Nippon Mecha Chemical Co. Ltd. can be used, and an inhibitor, chelating agent, water-soluble rust inhibitor, or volatile rust inhibitor containing amine-based carboxylic acids as components for the rust inhibition effect can also be used.

When the raw material powder is immersed in the solution of the rust inhibitor and then taken out from the solution, it is possible to obtain the aluminum powder product 1 shown in FIG. 1.

After the raw material powder is immersed in the solution of the rust inhibitor, the surface of the particle of the raw material powder may be washed using a washing solution, such as pure water or tap water. In a case where a film is formed on the surface of the particle of the raw material powder with the rust inhibitor, the raw material powder can be washed with pure water, tap water, and so on. In a case where the film is sufficiently formed with the rust inhibitor, it is considered that the film does not easily peel off even when the raw material powder is washed after the rust inhibition treatment.

The aluminum powder product 1 including the film is retrieved from the solution and dried in an atmosphere, such as the air. This drying treatment can be performed in any atmosphere from room temperature to 70°C, for example, at 45°C in the air.

The above-described steps make it possible to obtain the aluminum powder product 1 (aluminum powder product 1 including the film) of the objective of the present embodiment. That is, the produced aluminum powder product 1 has the following characteristics.

(1) The BET specific surface area is 0.16 $m^2$/g or more.
(2) The phosphorus concentration of the entire aluminum powder product 1 is $1\times10^{-3}$% by mass or more.
(3) In the photoelectron spectrum, the ratio $I_{P2s}/I_{Cl2p}$ is 1.00 or more.
(4) $D_{50}$ is preferably 15 $\mu$m or more and 45 $\mu$m or less.
(5) The Hausner ratio is preferably 1.14 or less.
(6) The sphericity is preferably 0.93 or more.
(7) The high concentration region 2a of phosphorus is preferably provided in a region at a depth of 30 nm or less from the outermost surface of the particle itself 2.

The phosphorus concentration in the high concentration region 2a of phosphorus is higher than that in the internal region at a depth of more than 30 nm and 60 nm or less from the outermost surface by 3.5 times or more. The phosphoric acid-based compounds are intensively distributed in the high concentration region 2a of phosphorus. The high concentration region 2a of phosphorus is desirably present on the entire surface of the particle itself 2 but may be in a state of being formed on the majority of the surface even when not being fully formed on the entire surface.

The aluminum powder product 1 is capable of suppressing the generation of hydrogen in hot water and thus exhibits superior corrosion resistance. The aluminum powder product 1 has sufficient corrosion resistance to water and can be thus suitably used in a binder jetting-type metal additive manufacturing step to be described below in which a water-containing binder is used.

When the aluminum powder product 1 satisfies the above-described particle size, since flowability is good, in the case of producing an additively manufactured body of the aluminum powder product 1, it is possible to stably obtain an aluminum powder product layer having a high level of apparent density. Therefore, it is possible to obtain a dense sintered body in the case of producing a sintered body.

From the analysis results of Examples to be described below, it is possible to presume that concentrated phosphorus is present on the surface side of the particle itself 2 as phosphoric acid-based compounds, and it is also found that the particle size of the particle itself 2 scarcely changes even after the rust removal treatment and the rust inhibition treatment described above. Therefore, in the aluminum powder product 1, it is possible to insure flowability as powder by a simple method. This makes it possible to produce a dense sintered body using the aluminum powder product 1. The aluminum powder product 1 has high flowability and is thus unlikely to cause occlusion in a channel in a silo or a hopper.

In addition, in the aluminum powder product 1, since it is possible to suppress the generation of hydrogen in hot water, the corrosion resistance improves, and an appropriate particle size can be maintained even after the rust removal treatment and the rust inhibition treatment, and it is thus possible to provide a highly safe powder with good handleability.

"Method for producing aluminum sintered body"

In order to produce an aluminum sintered body (additive manufactured part) using the aluminum powder product 1, a green body is produced using the aluminum powder product 1 as feedstock powder (powder for metal additive manufacturing). The green body is produced by a metal die molding method or an additive manufacturing method. In the metal die molding method, a green body is produced by packing the feedstock powder in a die having a predetermined shape. In the additive manufacturing method, the feedstock powder is spread all over a powder bed. A binder containing a thermosetting resin, a thermoplastic resin, or a photocurable resin is selectively sprayed to this feedstock powder, and the feedstock powder is adhered; and thereby, a first manufactured piece is produced. Next, the feedstock powder is supplied to the powder bed, and the feedstock powder is disposed on the first manufactured piece. The binder is selectively sprayed, and the feedstock powder is adhered; and thereby, a second manufactured piece is produced on the first manufactured piece. This operation is repeatedly performed, and a plurality of manufactured pieces are laminated together; and thereby, an additively manufactured body is produced.

In the additive manufacturing method, the binder is selectively sprayed to the feedstock powder, and the feedstock powder is adhered; and thereby, a manufactured piece is produced. This operation is repeated, and a plurality of manufactured pieces are laminated; and thereby, an additively manufactured body can be formed. The manufactured pieces are repeatedly laminated; and thereby, the feedstock powder is adhered so as to have a shape matching a desired three-dimensional shape. After the feedstock powder is adhered, removal of an unnecessary feedstock powder, degreasing, and so on are performed as necessary, and a green body is obtained.

Once the green body is obtained, the green body is accommodated in a heating furnace and sintered by being heated at a temperature of about 560°C to 650°C for a necessary time without pressurized in a vacuum atmosphere, a reducing atmosphere, an inert gas, or a reduced pressure gas flow atmosphere in which a reducing gas or an inert gas is used.

The resultant sintered body is finished as necessary by performing a heat treatment, machining with a cutting tool, surface polishing, and so on; and thereby, a sintered body (additive manufactured part) can be obtained.

This makes it possible to, for example, further improve the performance of a heat exchange part, a conductive part, or a strength part using the aluminum powder product 1. Examples

An aluminum mother material (aluminum purity: 99.5% or higher) or an A6061 aluminum alloy mother material was charged into a melting furnace, a molten aluminum or a molten aluminum alloy was produced, and aluminum powder products of Comparative Examples 1 to 4 in Table 1 below were produced from the molten metal by an inert gas atomization method.

Each of the aluminum powder products of Comparative Examples 1 to 4 was used as a raw material powder, and a rust removal treatment and a rust inhibition treatment were performed on the raw material powder according to the following procedure.

650 g of raw material powder and 300 mL of a rust remover (2-fold diluted BF4-26: product name of Tanimura Corporation) were charged into a container and stirred at room temperature and under ambient pressure. A mechanical stirrer was used for the stirring, and the components were stirred at 350 rpm.

After 15 minutes of the stirring, 500 mL of pure water was added thereto, and the solution was left to stand, and the supernatant liquid was removed in a state where the raw material powder had been precipitated. This pure water was added to increase the total amount of the solution and facilitate the separation of the raw material powder and the rust remover solution.

Next, 100 mL of a rust inhibitor (3-fold diluted BF4-16: product name of Tanimura Corporation) was charged into the container to neutralize the residual rust remover, pure water was added thereto again, the solution was left to stand, and the supernatant liquid was removed in a state where the powder had been precipitated. The rust remover was an acidic chemical, and the rust inhibitor was a basic chemical. This operation made the residual rust remover not function as an acid. Next, 300 mL of a rust inhibitor (3-fold diluted BF4-16: product name of Tanimura Corporation) was added thereto, and the solution was stirred with a stirring rod for about one minute to form a rust inhibition film on the surface of the particle of the raw material powder.

Pure water was added thereto, the solution was lightly mixed by shaking the container and then left to stand, and the supernatant liquid was then removed. This operation was performed three times, and the raw material powder remaining in the container was collected and dried in a drying furnace at 45°C. The dried raw material powder was retrieved and stored in the container together with a silica gel. A rust removal treatment and a rust inhibition treatment were performed on each of the aluminum powder products of Comparative Examples 1 to 4; and thereby, an aluminum powder product of each of Examples 1 to 4 were obtained. In detail, the aluminum powder product of Example 1 was produced using the aluminum powder product of Comparative Example 1 as the raw material powder. The aluminum powder product of Example 2 was produced using the aluminum powder product of Comparative Example 2 as the raw material powder. The aluminum powder product of Example 3 was produced using the aluminum powder product of Comparative Example 3 as the raw material powder. The aluminum alloy powder product of Example 4 was produced using the aluminum alloy powder product of Comparative Example 4 as the raw material powder.

The measurement results of the volume-based 50% cumulative average particle sizes ($D_{50}$: $\mu$m), BET specific surface areas ($m^2/g$), sphericities (circularities), and Hausner ratios of the resultant aluminum powder products of Comparative Examples 1 to 4 and Examples 1 to 4 are shown in Table 1 below. In addition, the P2p spectra, P2s spectra, and Cl2p spectra of the resultant aluminum powder products were measured by an XPS method. A cross section of the particle was observed with a TEM, and the concentration profile of each element in the depth direction was measured by an EDS method. The phosphorus concentration (% by mass) in the entire powder was measured.

O "Measurement of particle size distribution"

The particle size distribution was measured by a wet laser diffraction scattering method using MT3300EXII manufactured by MicrotracBEL Corp. From the obtained results, the volume-based 50% cumulative particle size was calculated as the average particle size.

O "Measurement of BET specific surface area"

The aluminum powder product was degassed at 200°C for 60 minutes using AUTOSORB-iQ2 manufactured by Quantachrome Instruments, Inc., and the amount of a krypton gas adsorbed at 77.35 K was then measured. The BET specific surface area was calculated from the amount of the krypton gas adsorbed.

O "Measurement of sphericity (circularity)"

A volume of 5 mm$^3$ of the aluminum powder product per specimen was sprayed to a glass plate using a dry image measuring instrument Morphologi 4 manufactured by Malvern Panalytical Ltd., and images of 20000 particles were captured with a microscope. The circularity value was calculated from the ratio of the circumferential length of a circle having the same area as an object projected from one particle to the peripheral length of the object. Then, the average value of the circularity values of the 20000 particles was obtained.

O "Measurement of Hausner ratio"

About 15 g of the aluminum powder product was weighed and poured into a 20 mL glass graduated cylinder, the volume of the aluminum powder product at that time was measured, and the apparent density was calculated from the volume and the charged amount of the aluminum powder product. In this state, the bottom of the graduated cylinder was tapped on the table 150 times, the volume of the aluminum powder product at that time was measured, and the tapped density was calculated from the volume and the charged amount. The tapped density was divided by the apparent density to obtain the Hausner ratio.

O "Measurement of photoelectron spectrum by XPS method"

The aluminum powder product was embedded in an indium foil and sampled, and the P2p spectrum, the P2s spectrum, and the Cl2p spectrum were measured using Al Kα rays (output: 50 W) as an X-ray source with ULVAC-PHI PHI5000 Versa Probe II.
O "Observation of particle cross section with TEM and measurement of concentration profile of each element in depth direction by EDS method"
FIB processing was performed on the particle of the aluminum powder product at an acceleration voltage of 30 kV using SMI3050 manufactured by Hitachi High-Tech Analysis Corporation, and a measurement specimen from which the particle cross section was exposed was fabricated. The particle cross section was observed with a transmission electron microscope Titan G2 80-200 manufactured by Thermo Fisher Scientific Inc. at an acceleration voltage of 200 kV. The concentration profile of each element in the depth direction was measured by an EDS method using Super-X manufactured by Bruker.

O "Measurement of phosphorus concentration in entire powder product"

The phosphorus concentration in the entire aluminum powder product was measured by a molybdenum blue method as follows. The aluminum powder product was dissolved in an acidic aqueous solution. An ammonium molybdate aqueous solution was added to the acidic aqueous solution to form a phosphomolybdic acid complex. Solvent extraction was performed on the phosphomolybdic acid complex with an organic solvent and then reduced with a stannous chloride solution. Next, the absorbance of the solution at a wavelength of 720 nm was measured, and the phosphorus concentration was calculated from the absorbance.

[Table 1]

| Specimen No. | Type of material | $D_{50}/\mu m$ | BET specific surface area/$m^2g^{-1}$ | Sphericity | Hausner ratio | P concentration/% | $I_{P2s}/I_{Cl2p}$ (XPS) | P concentration in surface region/P concentration in internal region |
|---|---|---|---|---|---|---|---|---|
| Comparative Example 1 | | 38.1 | 0.15 | 0.937 | 1.15 | $7\times10^{-4}$ | 0.943 | 2.35 |
| Comparative Example 2 | Pure A1 | 26.8 | 0.19 | 0.957 | 1.18 | $7\times10^{-4}$ | 0.970 | 2.29 |
| Comparative Example 3 | | 39.88 | 0.39 | 0.950 | 1.19 | $8\times10^{-4}$ | 0.952 | 1.55 |
| Comparative Example 4 | A6061 | 25.98 | 0.11 | 0.970 | 1.24 | $1\times10^{-4}$ | 0.976 | 3.22 |
| Example 1 | | 34.3 | 0.26 | 0.939 | 1.11 | $7\times10^{-3}$ | 1.23 | 4.43 |
| Example 2 | Pure A1 | 24.7 | 0.32 | 0.957 | 1.11 | $7\times10^{-3}$ | 1.15 | 7.07 |
| Example 3 | | 38.36 | 0.80 | 0.942 | 1.09 | $5\times10^{-3}$ | 1.04 | 4.12 |
| Example 4 | A6061 | 31.19 | 0.17 | 0.972 | 1.23 | $3\times10^{-3}$ | 1.11 | 3.60 |

As shown in Table 1, the aluminum powder products of Examples 1 to 4 had a BET specific surface area of 0.16 $m^2/g$ or more and a phosphorus concentration of $1 \times 10^{-3}$% by mass or more. Specifically, the BET specific surface areas were 0.17 to 0.80 $m^2/g$, the phosphorus concentrations were $3 \times 10^{-3}$ to $7 \times 10^{-3}$% by mass, the sphericities were 0.94 to 0.97, and the Hausner ratios were 1.09 to 1.23.

In addition, the BET specific surface area was larger in Example 1 than in Comparative Example 1, larger in Example 2 than in Comparative Example 2, larger in Example 3 than in Comparative Example 3, and larger in Example 4 than in Comparative Example 4. The median diameter $D_{50}$ was slightly smaller in Example 1 than in Comparative Example 1, slightly smaller in Example 2 than in Comparative Example 2, slightly smaller in Example 3 than in Comparative Example 3, and slightly larger in Example 4 than in Comparative Example 4.

From this fact, it is found that even when raw material powder having a particle size suitable for an additive manufacturing use and so on is produced and a rust removal treatment and a rust inhibition treatment are performed on the raw material powder, it is possible to maintain the particle size suitable for an additive manufacturing use. Therefore, the aluminum powder products of Examples 1 to 4 are suitable for additive manufacturing.

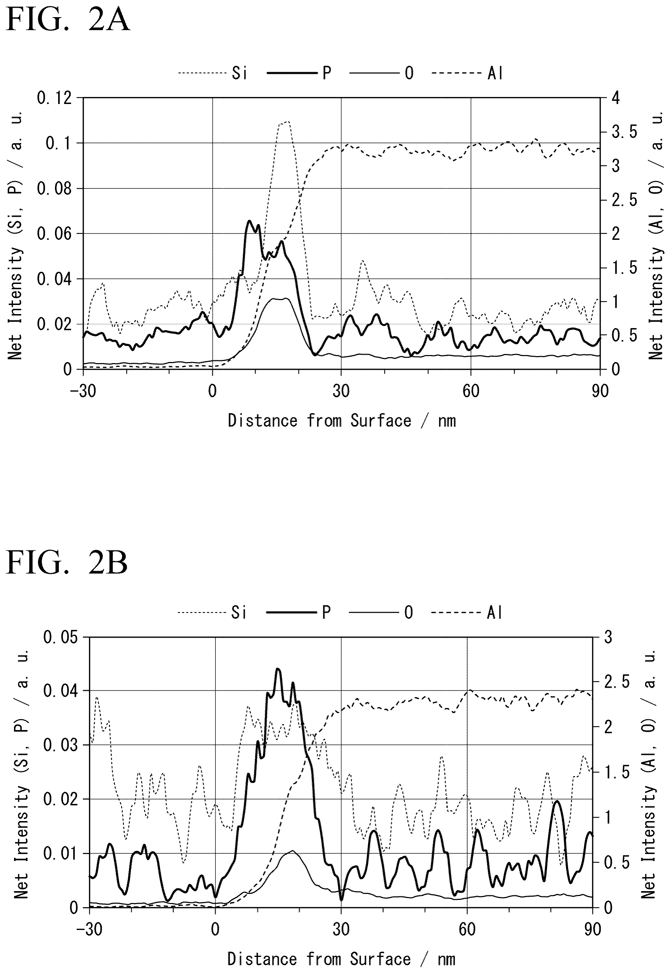

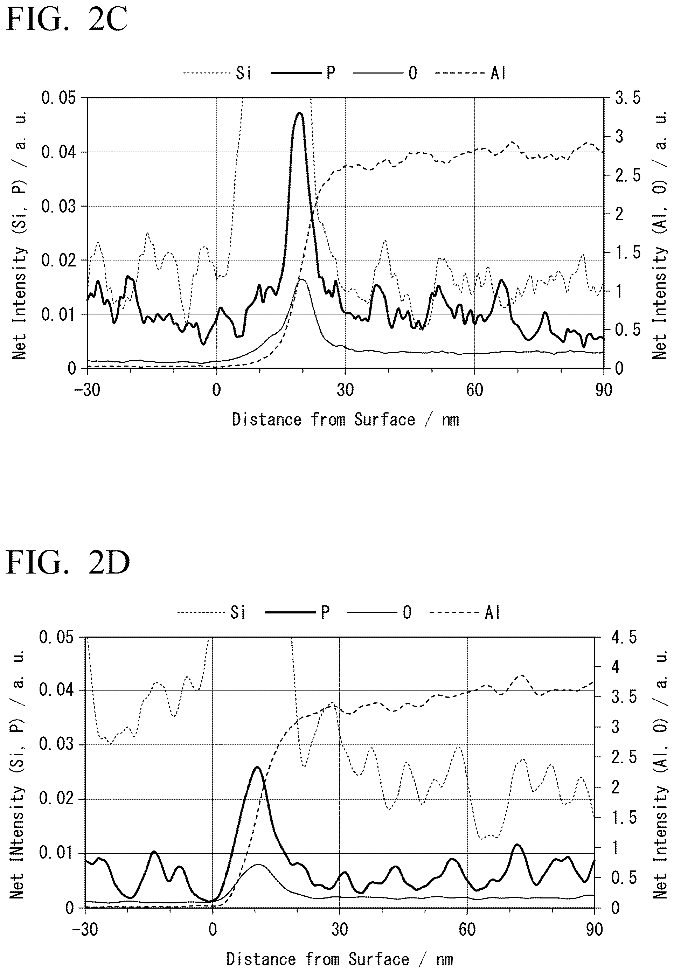

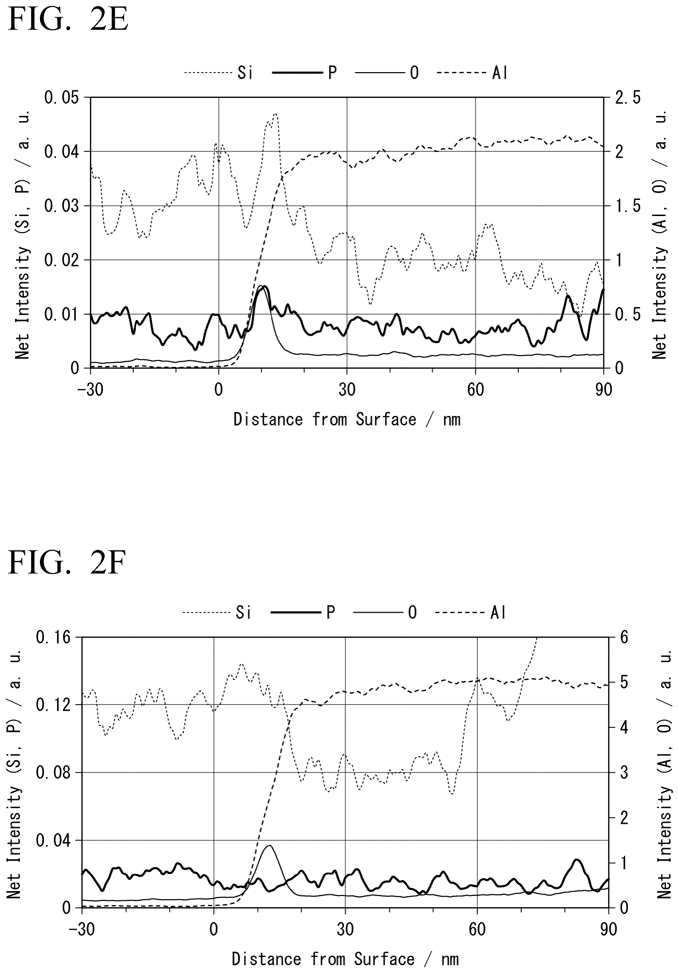

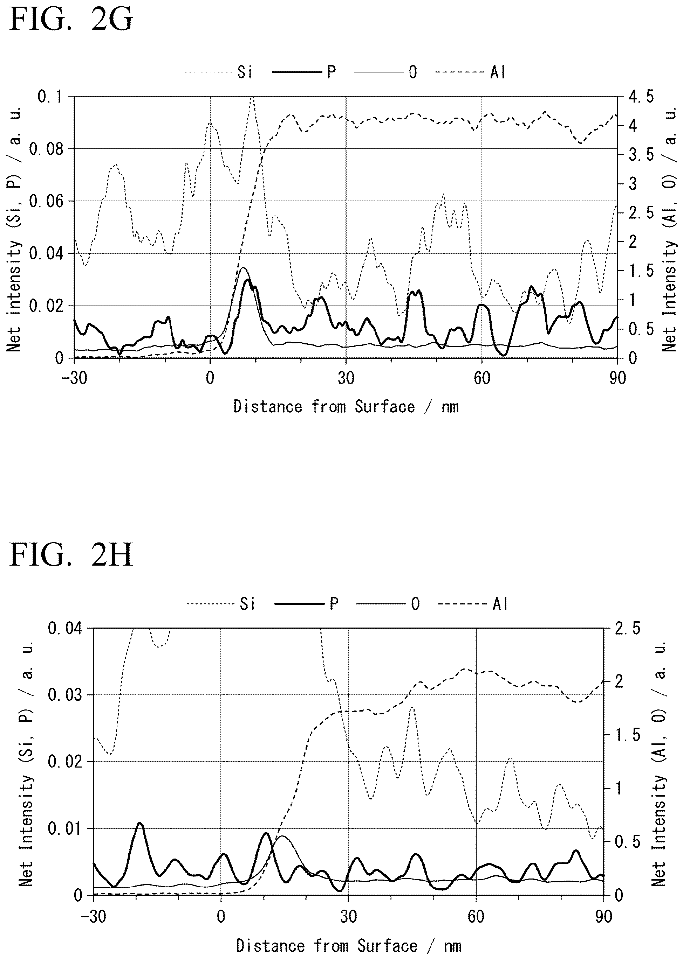

FIG. 2A to FIG. 2H show the concentration profiles of each element in the depth direction measured by the energy dispersive X-ray spectroscopy (EDS method) in the particle cross sections of the aluminum powder products of Examples 1 to 4 and Comparative Examples 1 to 4.

The EDS spectrum intensity of Al rapidly decreases in the vicinity of the surface of the particle. In FIG. 2A to FIG. 2H, the local minimum points of the EDS spectrum intensities of Al were defined as the positions of the outermost surfaces of the particles and regarded as the zero points of the horizontal axes. A range of the horizontal axis of - 30 nm or more and less than 0 nm is the outside of the particle.

As shown in FIG. 2A to FIG. 2H, the amount of Al (the EDS spectrum intensity of Al) gradually increased as the depth from the outermost surface increased. In Comparative Examples 1 to 4, the amount of Al was stable at a depth of more than 20 nm. In Examples 1 to 4, the amount of Al was stable at a depth of more than 30 nm.

In Examples 1 to 4, a region up to a depth of 30 nm in which the amount of Al gradually increased on the particle surface is considered as a region in which the film was formed (rust inhibition film) due to the influence of the rust remover and the rust inhibitor, and a region deeper than the depth of 30 nm is considered as the internal region of the particle itself.

From the results shown in FIG. 2A to FIG. 2D, it was found that in the aluminum powder products of Examples 1 to 4, the high concentration regions of phosphorus were present in the regions at a depth of 30 nm or less from the outermost surfaces, and the phosphorus concentrations in the high concentration regions of phosphorus were higher than the average values of the phosphorus concentrations in the internal regions at a depth of more than 30 nm and 60 nm or less by 3.5 times or more. On the other hand, in the aluminum powder products of Comparative Examples 1 to 4 shown in FIG. 2E to FIG. 2H, the presence of a region having a phosphorus concentration higher than the phosphorus concentration in the internal region by 3.5 times or more could not be confirmed in the regions from the outermost surfaces to a depth of 30 nm or less.

In the surface regions at a depth of 30 nm or less from the outermost surfaces and the internal regions at a depth of more than 30 nm and 60 nm or less of Examples 1 to 4 and Comparative Examples 1 to 4, integral values of EDS intensity ratio that are represented by the following Equation (1) were calculated, and the ratios of the integral value of EDS intensity ratio of the surface region to that of the internal region (the ratios of the concentration of phosphorus in the surface region to that in the internal region) were calculated.

In the measurement of the concentration profile of each element in the depth direction by the EDS method (line analysis in the depth direction), the step width between measurement points was about 0.769 nm. Therefore, there were 39 measurement points in a length of 30 nm in the depth direction (30/0.769 = 39). The integral value of EDS intensity ratio of the Equation (1) is the total of the phosphorus concentrations (P/(C + N + O + F + Al + Si + P)) at the 39 measured points.

The obtained results are shown in Table 1.

It was found that the ratios of the concentration of phosphorus in the surface region to the concentration of phosphorus in the internal region were larger in Examples 1 to 4 than in Comparative Examples 1 to 4, and in Examples 1 to 4, phosphorus was intensively distributed in the surface regions at a depth of 30 nm or less from the outermost surfaces.

In Comparative Examples 1 to 4, the EDS spectrum intensities of Al rapidly decreased in the surface regions at a depth of 30 nm or less from the outermost surfaces. Therefore, the value of the denominator of the phosphorus concentration (P/(C + N + O + F + Al + Si + P) rapidly decreased. As a result, even in Comparative Examples 1 to 4, the integral values of EDS intensity ratio of the surface regions became larger than those of the internal regions.

$$\text{integral value of EDS intensity ratio} = \sum_{n}^{39} \frac{P}{C+N+O+F+Al+Si+P} \quad \cdots \text{ Equation (1)}$$

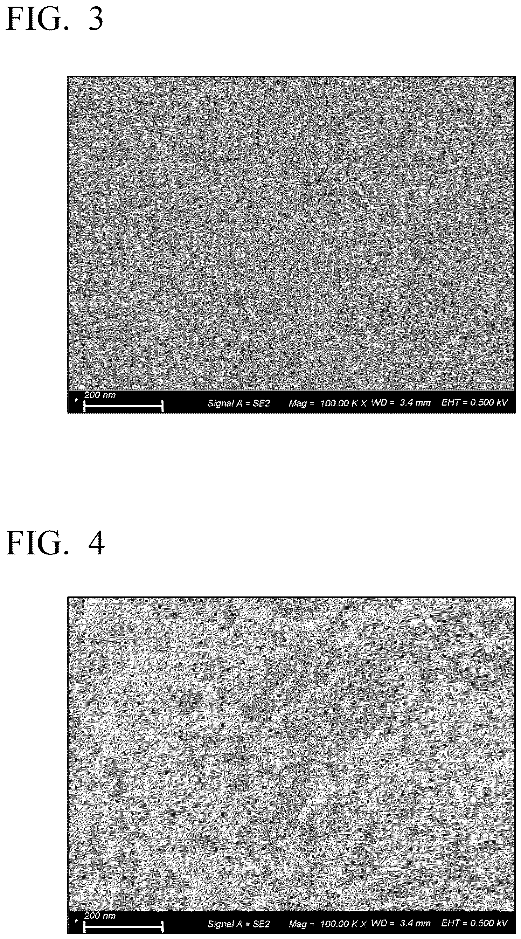

FIG. 3 shows a SEM image of the particle surface of Comparative Example 1, and FIG. 4 shows a SEM image of the particle surface of Example 1. From the comparison between FIG. 3 and FIG. 4, it is found that a large number of fine uneven structures were formed on the powder surface of Example 1. It is considered that the presence of this fine surface unevenness caused increases in the BET specific surface areas of Examples 1 to 4 shown in Table 1.

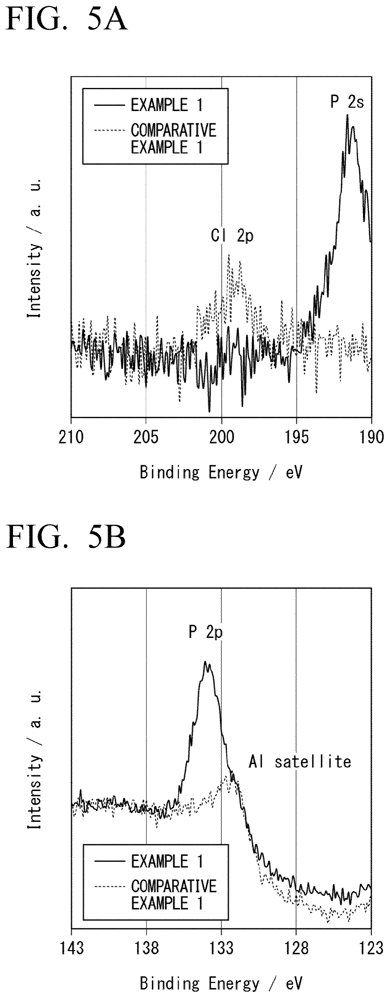

FIG. 5A to FIG. 8B show the photoelectron spectra of the aluminum powder products obtained by X-ray photoelectron spectroscopy (XPS method).

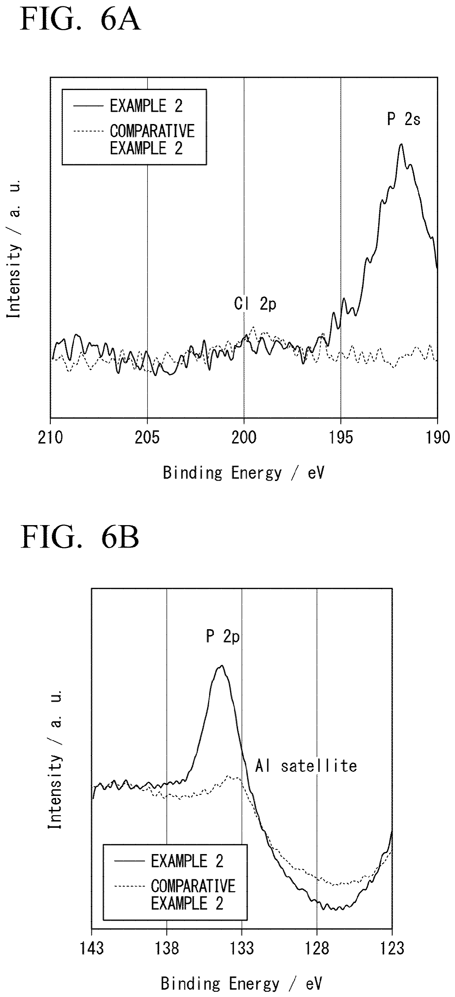

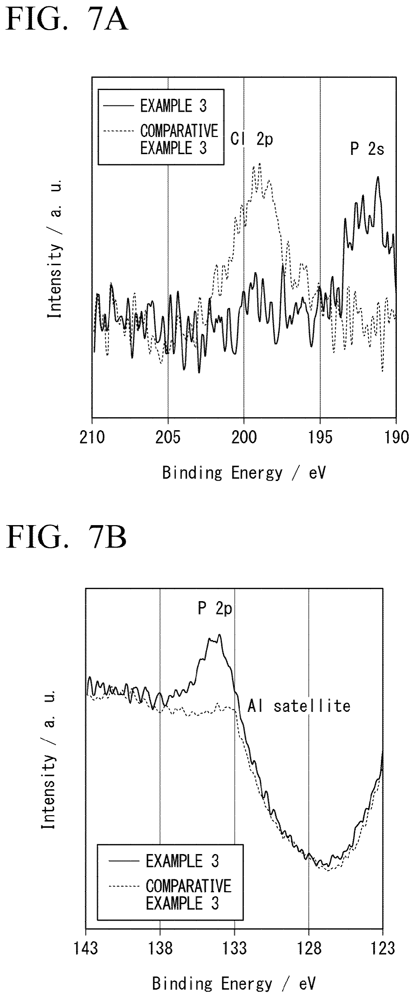

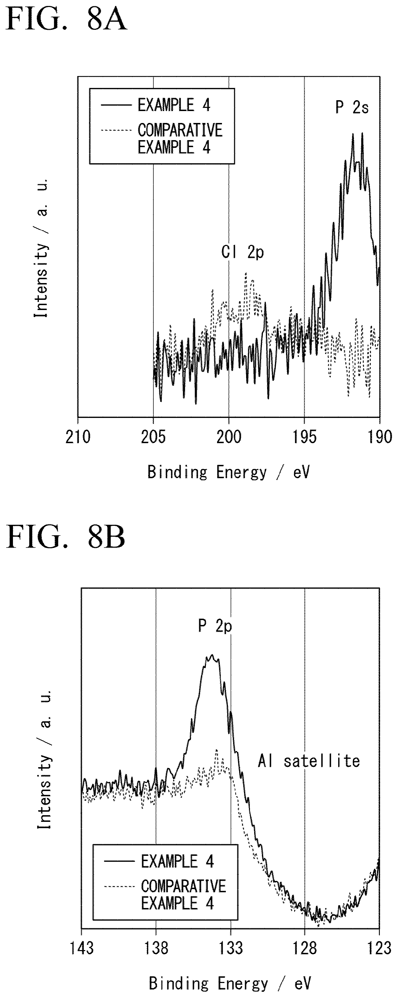

FIG. 5A and FIG. 5B show the P2p spectra, P2s spectra, and Cl2p spectra of Example 1 and Comparative Example 1. FIG. 6A and FIG. 6B show the P2p spectra, P2s spectra, and Cl2p spectra of Example 2 and Comparative Example 2. FIG. 7A and FIG. 7B show the P2p spectra, P2s spectra, and Cl2p spectra of Example 3 and Comparative Example 3. FIG. 8A and FIG. 8B show the P2p spectra, P2s spectra, and Cl2p spectra of Example 4 and Comparative Example 4.

In the photoelectron spectra of Comparative Example 1 shown in FIGS. 5A and 5B, a broad peak was observed in the energy range of the P2p spectrum, but no clear peaks were observed in the energy range of the P2s spectrum. From this fact, the peak of Comparative Example 1 shown in FIG. 5B is considered to be not derived from phosphorus species but be a satellite peak of Al.

In the photoelectron spectra of Example 1 shown in FIG. 5A and FIG. 5B, since a clear peak (191.5 eV) is present in the energy range of the P2s spectrum, the peak that is observed in the energy range of the P2p spectrum is also considered to be derived from phosphorus species. From the positions of the P2s peak and the P2p peak shown in FIG. 5A and FIG. 5B, it is possible to presume that phosphorus is present in a region in the vicinity of the surface not as pure phosphorus or alloy species but as phosphoric acid-based compounds (oxoacids of phosphorus).

The same tendency was shown in the P2s peaks and the P2p peaks in the photoelectron spectra of Examples 2 to 4 shown in FIG. 6A to FIG. 8B.

In the photoelectron spectra shown in FIG. 5A to FIG. 8B, the detected intensity (counts) of the baseline (background) was about 1000 to 3000. The detected intensities (counts) of the peak tops of the P2s peak and the P2p peak were numerical values around about +400 from the baseline. Therefore, the detected intensities (counts) of the P2s peak, the P2p peak, and the Cl2p peak were not deviated by large values from the detected intensities (counts) of the baseline. Therefore, the ratios $I_{P2s}/I_{Cl2p}$ of the P2s peak intensity $I_{P2s}$ to the Cl2p peak intensity $I_{Cl2p}$ became values around one as shown in Table 1.

From the analysis of the results of FIG. 2A to FIG. 2H and FIG. 5A to FIG. 8B, the following matters were found.

(1) The aluminum powder products of Examples 1 to 4 had a high concentration region of phosphorus in the region at a depth of 30 nm or less from the outermost surface.
(2) The phosphorus concentration in the high concentration region of phosphorus was higher than the phosphorus concentration in the internal region at a depth of more than 30 nm and 60 nm or less from the outermost surface by 3.5 times or more.
(3) The phosphoric acid-based compounds were intensively distributed in the high concentration region of phosphorus.

For example, according to the measurement results of FIG. 2A, it was found that in Example **1,** the high concentration region of phosphorus is present in a region at a depth of 30 nm or less from the outermost surface of the particle.

In addition, in Examples 1 to 4, the ratios $I_{P2s}/I_{Cl2p}$ of the P2s peak intensity $I_{P2s}$ at 191.5 eV to the Cl2p peak intensity $I_{Cl2p}$ at 199.0 eV were 1.00 or more. On the other hand, the ratios $I_{P2s}/I_{Cl2p}$ of Comparative Examples 1 to 4 were less than 1.00. In detail, the $I_{P2s}/I_{Cl2p}$'s of Examples 1 to 4 in Table 1 were 1.04 to 1.23. On the other hand, the $I_{P2s}/I_{Cl2p}$'s of Comparative Examples 1 to 4 were 0.943 to 0.976.

INDUSTRIAL APPLICABILITY

The aluminum powder product of the present embodiment is suitably applied as feedstock powder for metal additive manufacturing.

REFERENCE SIGNS LIST

1 Aluminum powder product
2 Particle itself
2a High concentration region

**Claims**

1. An aluminum powder product,
   wherein a BET specific surface area of the aluminum powder product is 0.16 $m^2/g$ or more, a phosphorus concentration of an entire of the aluminum powder product measured by a molybdenum blue method is $1 \times 10^{-3}\%$ by mass or more, and in a photoelectron spectrum of the aluminum powder product measured by X-ray photoelectron spectroscopy (XPS method), a ratio $I_{P2s}/I_{Cl2p}$ of a P2s peak intensity $I_{P2s}$ at 191.5 eV to a Cl2p peak intensity $I_{Cl2p}$ at 199.0 eV is 1.00 or more.

2. The aluminum powder product according to Claim 1,
   wherein a high concentration region of phosphorus is provided in a region at a depth of 30 nm or less from an outermost surface of a particle that constitutes the aluminum powder product, a phosphorus concentration in the high concentration region of phosphorus is higher than a phosphorus concentration in a region at a depth of more than 30 nm from the outermost surface of the particle by 3.5 times or more, and phosphoric acid-based compounds are intensively distributed in the high concentration region of phosphorus.

3. The aluminum powder product according to Claim 1 or 2,
   wherein a volume-based 50% cumulative particle size (median diameter $D_{50}$) measured by a laser diffraction scattering method is 15 $\mu$m or more and 45 $\mu$m or less, and a Hausner ratio of the aluminum powder product is 1.14 or less.

4. The aluminum powder product according to Claim 1 or 2,
   wherein a sphericity measured by an image analysis method is 0.93 or more.

5. The aluminum powder product according to Claim 3,
   wherein a sphericity measured by an image analysis method is 0.93 or more.

6. The aluminum powder product according to Claim 1 or 2,
   wherein the aluminum powder product is used in additive manufacturing.

7. The aluminum powder product according to Claim 3,
   wherein the aluminum powder product is used in additive manufacturing.

8. The aluminum powder product according to Claim 4,
   wherein the aluminum powder product is used in additive manufacturing.

9. The aluminum powder product according to Claim 5,
   wherein the aluminum powder product is used in additive manufacturing.

FIG. 1

FIG. 2A

FIG. 2B

## FIG. 2C

## FIG. 2D

## FIG. 2E

## FIG. 2F

FIG. 2G

FIG. 2H

FIG. 3

FIG. 4

FIG. 5A

FIG. 5B

FIG. 6A

FIG. 6B

## FIG. 7A

## FIG. 7B

# FIG. 8A

# FIG. 8B

## INTERNATIONAL SEARCH REPORT

| International application No. |
|---|
| **PCT/JP2024/011444** |

**A. CLASSIFICATION OF SUBJECT MATTER**

*B22F 1/00*(2022.01)i; *B22F 1/05*(2022.01)i; *B22F 1/16*(2022.01)i; *B22F 1/065*(2022.01)i; *B22F 10/14*(2021.01)i;
*B22F 10/34*(2021.01)i; *B33Y 70/00*(2020.01)i; *C22C 21/00*(2006.01)i
FI: B22F1/00 N; B22F1/05; B22F1/16; B22F1/065; B22F10/14; B22F10/34; C22C21/00 N; B33Y70/00

According to International Patent Classification (IPC) or to both national classification and IPC

**B. FIELDS SEARCHED**

Minimum documentation searched (classification system followed by classification symbols)

B22F1/00; B22F1/05; B22F1/16; B22F1/065; B22F10/14; B22F10/34; B33Y70/00; C22C21/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2012-072441 A (TOYO ALUMINIUM KK) 12 April 2012 (2012-04-12) | 1-9 |
| A | WO 2016/185966 A1 (KONICA MINOLTA, INC.) 24 November 2016 (2016-11-24) | 1-9 |

☐ Further documents are listed in the continuation of Box C. ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **23 April 2024** | **14 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

| International application No. |
|---|
| **PCT/JP2024/011444** |

| Patent document cited in search report | | | Publication date (day/month/year) | Patent family member(s) | | | Publication date (day/month/year) |
|---|---|---|---|---|---|---|---|
| JP | 2012-072441 | A | 12 April 2012 | (Family: none) | | | |
| WO | 2016/185966 | A1 | 24 November 2016 | US | 2018/0065324 | A1 | |
| | | | | EP | 3296043 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023055049 A
- JP 2019112699 A
- JP 2019183199 A